(19) Europäisches Patentamt
European Patent Office
Office européen des brevets

(11) **EP 3 832 165 B1**

(12) **EUROPÄISCHE PATENTSCHRIFT**

(45) Veröffentlichungstag und Bekanntmachung des Hinweises auf die Patenterteilung:
**31.01.2024 Patentblatt 2024/05**

(21) Anmeldenummer: **20209663.2**

(22) Anmeldetag: **25.11.2020**

(51) Internationale Patentklassifikation (IPC):
**F16H 47/02** (2006.01)   **F16H 61/42** (2010.01)
**F16H 61/444** (2010.01)   **F16H 61/472** (2010.01)
**F16H 61/04** (2006.01)   **F16H 61/70** (2006.01)

(52) Gemeinsame Patentklassifikation (CPC):
**F16H 61/472; F16H 47/02; F16H 61/04; F16H 61/42; F16H 61/444; F16H 61/702;** F16H 59/18; F16H 59/44; F16H 2059/6861; F16H 2059/6892

(54) **FAHRANTRIEB FÜR EIN FAHRZEUG MIT EINEM FAHRGETRIEBE UND STEUERARCHITEKTUR ZUM STEUERN DES FAHRGETRIEBES**

DRIVE FOR A VEHICLE WITH A TRANSMISSION AND CONTROL ARCHITECTURE FOR CONTROLLING THE TRANSMISSION

SYSTÈME D'ENTRAÎNEMENT POUR UN VÉHICULE DOTÉ D'UN ENGRENAGE D'ENTRAÎNEMENT ET ARCHITECTURE DE COMMANDE PERMETTANT DE COMMANDER L'ENGRENAGE D'ENTRAÎNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.12.2019 DE 102019218901**

(43) Veröffentlichungstag der Anmeldung:
**09.06.2021 Patentblatt 2021/23**

(73) Patentinhaber: **Robert Bosch GmbH**
**70442 Stuttgart (DE)**

(72) Erfinder:
• **Mutschler, Steffen**
**89233 Neu-Ulm (DE)**
• **Xiang, Yusheng**
**89077 Ulm (DE)**
• **Brach, Christine**
**89233 Neu-Ulm (DE)**
• **Brix, Norman**
**89340 Leipheim (DE)**

(56) Entgegenhaltungen:
EP-A1- 3 553 347        DE-A1-102011 055 174
DE-B3-102017 220 003

**Beschreibung**

Die Erfindung betrifft einen Fahrantrieb für ein Fahrzeug mit einem Fahrgetriebe, das ein Fahren in mehreren Fahrbereichen ermöglicht und in dem ein mechanisches Getriebe kombiniert ist mit einem hydrostatischen Getriebe, das eine in ihrem Hubvolumen verstellbare Hydropumpe und wenigsten einen Hydromotor umfasst, der mit der Hydropumpe in einem geschlossenen hydraulischen Kreislauf mit zwei Kreislaufzweigen angeordnet und mit einem Eingang des mechanischen Getriebes verbunden ist. Der Fahrantrieb umfasst außerdem ein elektronisches Steuergerät zur Durchführung einer zugkraftbasierten Steuerung des Fahrgetriebes.

Die Kombination eines hydrostatischen Getriebes mit einer Hydropumpe und mit einem Hydromotor, die miteinander in einem geschlossenen hydraulischen Kreislauf angeordnet sind, mit einem mechanischen Getriebe bringt eine hohe Systemeffizienz und eine breite Nutzbarkeit von mobilen Arbeitsmaschine mit sich. Als mögliche mechanische Getriebe seien hier synchronisierte Getriebe mit zwei oder mehr Getriebestufen, Summationsgetriebe, die zwei oder mehr Getriebestufen aufweisen und die Fahrbereiche haben, in denen verschiedene Anzahlen von Hydromotoren, zum Beispiel ein erster Hydromotor im einem ersten Fahrbereich und zusätzlich zum ersten Hydromotor ein zweiter Hydromotor in einem zweiten Fahrbereich, mit dem Getriebeausgang verbunden sind, und Lastschaltgetriebe. Mit einem Fahrgetriebe der skizzierten Art kann der Fahrantrieb einer mobilen Arbeitsmaschine so konzipiert sein, dass eine momentenbasierte Steuerung oder eine geschwindigkeitsbasierte Steuerung möglich ist.

Eine momentenbasierte Steuerung ist in der Veröffentlichung "Torque control for mobile machines" Proceedings of the 11th International Fluid Power Conference, Aachen, Deutschland beschrieben.

EP 3 553 347 A1 betrifft ein Verfahren zur Steuerung einer hydraulisch angetriebenen Arbeitsmaschine, wobei eine Zielzugkraft bei Stillstand, die zu einer Leckstromrate korrespondiert, verwendet wird, um eine hydraulische Pumpe, einen hydraulischen Motor und einen Verbrennungsmotor zu steuern.

Der Erfindung liegt die Aufgabe zugrunde, einen Fahrantrieb mit den eingangs genannten Merkmalen so auszubilden, dass das Fahrverhalten bei einem Gangwechsel verbessert ist.

Diese Aufgabe wird dadurch gelöst, dass von dem elektronischen Steuergerät aus vor einem Wechsel des Fahrbereichs vorliegenden Fahrzeugparametern die nach dem Wechsel des Fahrbereichs gewünschte Zielzugkraft und aus der gewünschten Zielzugkraft und aus einem Hubvolumen des wenigsten einen Hydromotors eine Solldruckdifferenz zwischen den beiden Kreislaufzweigen des geschlossenen hydraulischen Kreislaufs ermittelt wird und dass nach dem Wechsel des Fahrbereichs zwischen den zwei Kreislaufzweigen des geschlossenen hydraulischen Kreislaufs durch einen Druckregler eine der Solldruckdifferenz entsprechende Druckdifferenz eingestellt wird.

Lösungen nach dem Stand der Technik haben ein von der Getriebestufe abhängiges Fahrverhalten. Dies bringt es mit sich, dass die Fahrzeuggeschwindigkeit bei gleicher Stellung des Fahrpedals in verschiedenen Gangstufen nicht dieselbe ist. Das bringt es wiederum mit sich, dass die Differenz zwischen der gewünschten Geschwindigkeit und der aktuellen Geschwindigkeit nach dem Schalten sehr groß sein kann. Somit macht das Fahrzeug einen Ruck. Um diesen Ruck zu vermeiden, sind die Werte einer Reihe von Parametern festzulegen. Dies erschwert einerseits den Prozess der Kalibration und führt andererseits in vielen Fällen zu einem langsamen Gangwechsel. Zum Beispiel benötigt der Gangwechsel zur Vermeidung des Rucks drei Sekunden, obwohl die theoretisch mögliche kürzeste Zeit für einen Gangwechsel nur 1,0 Sekunden beträgt.

Ein erfindungsgemäßer Fahrantrieb hat wegen der einstellbaren Zugkraft nach dem Gangwechsel das geschilderte Problem nicht. Damit ist der Fahrantrieb wesentlich leichter zu kalibrieren. Die Qualität eines Gangwechsels und damit der Fahrkomfort sind verbessert. Fast jeder Gangwechsel findet mit einer sehr geringen Bandbreite in sehr kurzer Zeit statt.

Ein erfindungsgemäßer Fahrantrieb kann in vorteilhafter Weise weiter ausgestaltet werden.

So erscheint das Fahrverhalten besonders komfortabel, wenn die gewünschte Zielzugkraft gleich der Zugkraft vor dem Wechsel des Fahrbereichs ist.

Die gewünschte Zielzugkraft kann unter alleiniger Heranziehung der Stellung des Fahrpedals ermittelt werden. Es kann jedoch zusätzlich auch die Geschwindigkeit des Fahrzeugs in die Ermittlung der gewünschten Zielzugkraft eingehen. Unter der Annahme, dass die Fahrzeuggeschwindigkeit nach dem Schalten ähnlich der Fahrzeuggeschwindigkeit vor dem Schalten ist, sollte auch die Zugkraft vor und nach dem Schalten gleich sein.

Bei bestimmten Ausbildungen des mechanischen Getriebes mit wenigstens einem in seinem Hubvolumen verstellbaren Hydromotor wird das in die Ermittlung der Solldruckdifferenz eingehende normierte Hubvolumen $\alpha_m$ des wenigstens einen Hydromotors nach der Formel $\alpha_m$ = das Minimum der beiden Werte $n_p V_p / n_m V_m$ und 1 ermittelt, wobei $n_p$ die Drehzahl der Hydropumpe, $n_m$ die Drehzahl des Hydromotors, $V_p$ das maximale Hubvolumen der Hydropumpe und $V_m$ das maximale Hubvolumen des Hydromotors oder der Hydromotoren ist. $\alpha_m$ ist also gleich $n_p V_p / n_m V_m$ oder gleich 1, je nachdem, welcher Wert der kleinere ist.

Es ist denkbar, die Drehzahl des Hydromotors durch einen Drehzahlsensor zu erfassen. Man kann die Drehzahl des Hydromotors jedoch auch aus der Geschwindigkeit des Fahrzeugs ermitteln.

Es sind mechanische Getriebe bekannt, die als bloße Summierungsgetriebe ausgebildet sind. Verschiedene Fahrbereiche werden hier dadurch realisiert, dass in den Fahrbereichen unterschiedlich viele Hydromotoren mit dem Ausgang des mechanischen Getriebes verbunden sind. Zum Beispiel sind in einem ersten Fahrbereich zwei Hydromotoren mit dem Getriebeausgang verbunden, während in einem zweiten Fahrbereich nur noch ein Hydromotor mit dem Getriebeausgang verbunden ist. Die Erfindung ist sowohl auf Fahrgetriebe mit solchen Summierungsgetrieben als auch auf Fahrgetriebe anwendbar, die ein mechanisches Getriebe mit wenigstens zwei Gangstufen aufweisen und bei denen beim Wechsel des Fahrbereichs von einer Gangstufe in eine andere Gangstufe gewechselt wird.

Das elektronische Steuergerät eines erfindungsgemäßen Fahrantriebs hat vorteilhafterweise eine Steuerarchitektur, die einen allgemeinen Teil, der für wenigstens zwei unterschiedlich ausgebildete Fahrgetriebe gleich programmiert ist, und mehrere unterschiedliche spezielle Teile umfasst, von denen jedes über eine Schnittstelle mit dem allgemeinen Teil verbindbar ist und entsprechend der speziellen Ausbildung eines Fahrgetriebes programmiert ist.

Eine solche Steuerarchitektur schließt vorteilhafterweise jedoch auch ein Fahrgetriebe mit ein, das ein hydrostatisches Getriebe mit einer Hydropumpe und einem Hydromotor, aber kein dem Hydromotor nachgeordnetes mechanisches Getriebe umfasst. Es gibt dann also auch für ein Fahrgetriebe mit einem bloßen hydrostatischen Getriebe einen speziellen Teil.

Vorteilhafterweise haben die mehreren unterschiedlichen speziellen Teile jeweils die gleiche Schnittstelle zur Verbindung mit dem allgemeinen Teil.

Ermöglicht das Fahrgetriebe ein Fahren in mehreren Fahrbereichen, so ist es günstig, wenn der allgemeine Teil geeignet programmiert ist, um das Fahrgetriebe beim Fahren innerhalb eines Fahrbereichs zu steuern, und wenn der spezielle Teil geeignet programmiert ist, um das Fahrgetriebe während eines Wechsels zwischen zwei Fahrbereichen zu steuern.

Während eines Wechsels zwischen zwei Fahrbereichen kann der spezielle Teil derart arbeiten, dass die Steuersignale des allgemeinen Teils vom speziellen Teil überschrieben werden.

Vorteilhafterweise sind im allgemeine Teil der Steuerarchitektur Gleichungen zur Berechnung des Hubvolumens des Hydromotors oder der Hydromotoren und zur Berechnung der Druckdifferenz über den Hydromotor oder die Hydromotoren enthalten, wobei die Gleichungen Terme für verschiedene Fahrgetriebe aufweisen, die durch Faktoren, die in Abhängigkeit von der Ausbildung des Fahrgetriebes den Wert null oder eins haben, aktiviert oder deaktiviert werden.

Die Steuerarchitektur ist vorzugsweise für eine momentenbasierte Steuerung des Fahrgetriebes ausgebildet ist.

Die Steuerarchitektur für das elektronische Steuergerät wird sich weniger im mechanischen Aufbau des Steuergeräts als in der Software zeigen, die ein allgemeines Programm oder mehrere allgemeine Programme enthält, die für unterschiedlich ausgebildete Fahrantriebe anwendbar sind und den allgemeinen Teil der Steuerarchitektur darstellen, der je nach der Art des Fahrgetriebes durch ein oder mehrere spezielle Programme ergänzt wird, die an einer Schnittstelle oder mehreren Schnittstellen das allgemeine Programm ergänzen.

Mehrere verschieden ausgebildete Fahrantriebe mit Fahrgetrieben, die ein hydrostatisches Getriebe und ein mechanisches Getriebe umfassen, Steuerungsdiagramme für diese Fahrgetriebe und Blockdiagramme für die Steuerung dieser Fahrgetriebe sind in den Zeichnungen dargestellt. Anhand dieser Zeichnungen wird die Erfindung nun näher erläutert.

Es zeigen

Figur 1   für einen erfindungsgemäßen Fahrantrieb ein Blockdiagramm der elektronischen Steuerung, gemäß dem eine nach einem Wechsel des Fahrbereichs gewünschte Zielzugkraft erhalten wird,

Figur 2   eine Steuerarchitektur für ein elektronisches Steuergerät, die einen allgemeinen Teil, der für wenigstens zwei unterschiedlich ausgebildete Fahrgetriebe gleich programmiert ist, und mehrere unterschiedliche spezielle Teile umfasst, von denen jeder über eine Schnittstelle mit dem allgemeinen Teil verbindbar ist,

Figur 3   ein Blockdiagramm mit einer gemäß Figur 2 ausgebildeten Steuerarchitektur,

Figur 4   das Schaltbild eines ersten erfindungsgemäß gesteuerten Fahrantriebs mit einem zwei Gangstufen und eine Synchronisiereinrichtung aufweisenden mechanischen Getriebe,

Figur 5   ein Schaltdiagramm für den Fahrantrieb aus Figur 4 mit einem Wechsel des Fahrbereiches,

Figur 6   das Schaltbild eines zweiten erfindungsgemäß gesteuerten Fahrantriebs mit zwei Hydromotoren und einem als Summierungsgetriebe ausgebildeten mechanischen Getriebe,

Figur 7   eine erste Variante eines Schaltdiagramms für den Fahrantrieb aus Figur 6 mit einem Wechsel des Fahrbereichs,

Figur 8   eine zweite Variante eines Schaltdiagramms für den Fahrantrieb aus Figur 6 mit einem Wechsel des Fahrbereichs,

Figur 9   eine dritte Variante eines Schaltdiagramms für eine Variante des Fahrantriebs aus Figur 6 mit einem Wechsel des Fahrbereichs,

Figur 10   das Schaltbild eines dritten erfindungsgemäß gesteuerten Fahrantriebs mit zwei Hydromotoren und mit einem mehrere Gangstufen aufweisenden mechanischen Getriebe,

Figur 11   ein Schaltdiagramm für den Fahrantrieb aus Figur 10 mit den Wechseln zwischen den Fahrbereichen und

Figur 12    das Schaltbild eines vierten erfindungsgemäß gesteuerten Fahrantriebs mit einem Hydromotor und mit einem mehrere Gangstufen aufweisenden mechanischen Getriebe mit zwei Kupplungen.

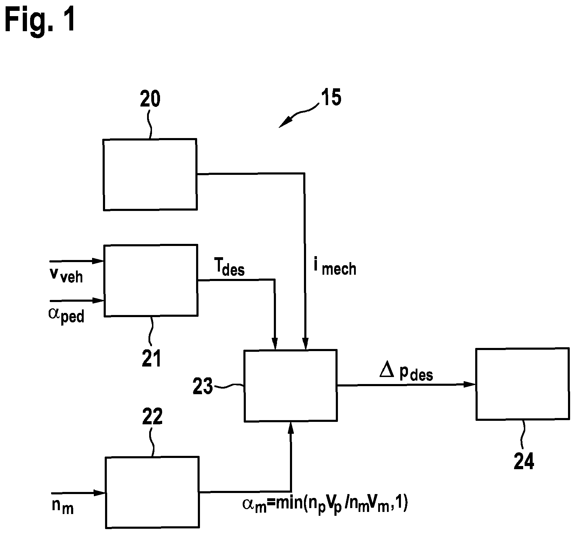

Die elektronischen Steuerung 15 gemäß Figur 1 ist für einen Fahrantrieb vorgesehen, in dem ein hydrostatisches Getriebe mit zwei Gangstufen mit einer Hydropumpe und mit einem mit der Hydropumpe in einem geschlossenen hydraulischen Kreislauf betriebenen Hydromotor miteinander kombiniert sind. Die Hydropumpe und der Hydromotor sind über zwei Kreislaufzweige fluidisch miteinander verbunden. Einen Steuerungsabschnitt 20 der elektronischen Steuerung 15 kann man als Schaltmanager bezeichnen, in dem aus dem augenblicklichen Fahrzeugzustand ermittelt wird, ob ein Gangwechsel stattzufinden hat, und von dem gegebenenfalls ein Gangwechsel initiiert und gesteuert wird. Die Übersetzung $i_{mech}$ des mechanischen Getriebes ist somit vom Steuerungsabschnitt 20 festgelegt und wird von diesem als Ausgangssignal ausgegeben. Die elektronische Steuerung gemäß Figur 1 hat weiterhin einen Steuerungsabschnitt 21, dem als Eingangsgrößen die Geschwindigkeit $v_{veh}$ des Fahrzeugs und die Winkelstellung $\alpha_{ped}$ des Fahrpedals zugeführt werden und der aus diesen vor einem Wechsel vorliegenden Eingangsgrößen die nach dem Wechsel des Fahrbereichs gewünschte Zielzugkraft beziehungsweise das gewünscht Zieldrehmoment $T_{des}$ an den Fahrzeugrädern ermittelt und deshalb als Zugkraftplaner oder Zieldrehmomentplaner bezeichnet werden kann. Einem weiteren Steuerungsabschnitt 22 der elektronischen Steuerung 15 wird die Drehzahl $n_m$ des Hydromotors zugeführt. Diese kann entweder gemessen oder aus der Geschwindigkeit des Fahrzeugs abgeleitet werden. In dem Steuerungsabschnitt 22 wird ein gewünschtes normiertes Hubvolumen des Hydromotors nach der Vorschrift $\alpha_m = \min(n_p V_p / n_m V_m, 1)$ ermittelt, wobei $n_p$ die Drehzahl der Hydropumpe, $n_m$ die Drehzahl des Hydromotors, $V_p$ das maximale Hubvolumen der Hydropumpe und $V_m$ das maximale Hubvolumen des Hydromotors oder der Hydromotoren ist. $\alpha_m$ ist also gleich $n_p V_p / n_m V_m$, falls $n_p V_p / n_m V_m$ kleiner als 1 ist, und gleich 1, falls $n_p V_p / n_m V_m$, größer als 1 ist. Üblicherweise sind die Hydropumpe und der Hydromotor Axialkolbenmaschinen und das normierte Hubvolumen ist durch den Schwenkwinkel bestimmt, weshalb hier das Formelzeichen $\alpha$ verwendet wird. Der nach einem Gangwechsel für den Hydromotor gewünschte Schwenkwinkel, das nach einem Gangwechsel gewünschte Zieldrehmoment $T_{des}$ und die mechanische Übersetzung $i_{mech}$ nach dem Gangwechsel werden als elektronische Signale einem Steuerungsabschnitt 23 der elektronischen Steuerung 15 zugeführt, der aus den zugeführten Werten eine gewünschte Druckdifferenz $\Delta p_{des}$ ermittelt, die nach dem Gangwechsel über den Hydromotor bestehen soll. Die gewünschte Druckdifferenz wird an eine Drucksteuereinrichtung 24 gegeben, die den Schwenkwinkel der Hydropumpe so einstellt, dass über den Hydromotor die gewünschte Druckdifferenz ansteht. Der Ist-Wert der Druckdifferenz kann zum Beispiel aus den Signalen von zwei Drucksensoren erfasst werden, von denen der eine den Druck im einen Kreislaufzweig und der andere den Druck im anderen Kreislaufzweig erfasst. Die Druckdifferenz kann auch durch einen auf einen Stellkolben der Hydropumpe wirkenden Stelldruck, der zum Beispiel mit einem Druckregelventil eingestellt wird, und damit durch eine auf den Stellkolben resultierenden Kraft vorgegeben werden.

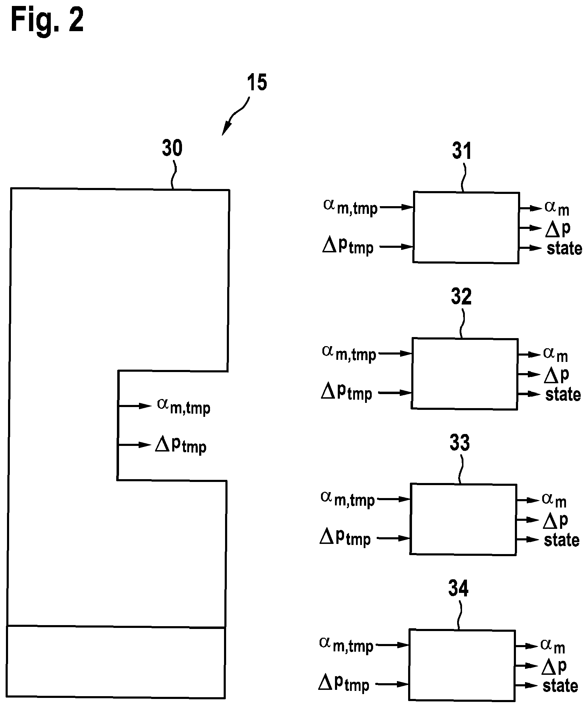

Ein hydrostatisches Getriebe kann mit unterschiedlichen Arten von mechanischen Getrieben kombiniert werden. Es ist von großem Vorteil, wenn Fahrantriebe mit unterschiedlichen mechanischen Getrieben mit nur einer Softwareplattform gesteuert werden können. Es werden dann Entwicklungszeit und Kosten eingespart. Die Steuerarchitektur einer solchen Softwareplattform ist in Figur 2 dargestellt. Sie weist einen allgemeinen Teil 30, der für wenigstens zwei unterschiedlich ausgebildete Fahrgetriebe gleich programmiert ist und derart ausgebildet ist, dass er die temporären Steuervariablen $\alpha_{m,tmp}$ und $\Delta p_{tmp}$, also einen temporären Schwenkwinkel des Hydromotors und eine temporäre Druckdifferenz während des normalen Fahrens in einem Fahrbereich ausgibt. Die Steuerarchitektur umfasst mehrere unterschiedliche spezielle Teile 31, 32, 33, 34, von denen jeder über die gleiche Schnittstelle am allgemeinen Teil mit diesem verbindbar ist und entsprechend der speziellen Ausbildung eines Fahrgetriebes programmiert ist. In Kombination mit dem allgemeinen Teil ist ein spezieller Teil dafür vorgesehen, getriebespezifische Steuervariablen $\alpha_m$ und $\Delta p$ und Informationen (state) zum Status des Getriebes während eines Wechsels eines Fahrbereichs, insbesondere während eines Wechsels der Gangstufe des mechanischen Getriebes auszugeben. In allgemeiner Form lässt sich sagen, dass die speziellen Teile die Ausgangssignale des allgemeinen Teils überschreiben. Hier sei bemerkt, dass die speziellen Teile der Getriebesteuerung nicht nur mit einem allgemeinen Teil, der für eine Drehmomentsteuerung ausgelegt ist, sondern auch an andere Arten von Getriebesteuerungen angepasst werden können. Auch bei anderen Arten von Getriebesteuerungen kann also die Aufteilung der Steuerarchitektur in einen allgemeinen Teil und in spezielle Teile verwirklicht werden.

Durch ein in Figur 2 an den allgemeinen Teil 15 der Steuerarchitektur angefügtes Rechteck ist angedeutet, dass ein Dritter, zum Beispiel ein Kunde, seine eigene Software, die wenig Bezug zur Hydrostatik hat, hinzufügen kann, ohne dazu viel Know-How in der Hydrostatik zu haben.

Vorteilhaft ist bei der Steuerarchitektur auch, dass an einem Fahrantrieb vorgenommene Optimierungen sich leicht auf andere Arten von Fahrantrieben übertragen lassen. Außerdem kann Software eines Dritten mit dem allgemeinen Teil der Steuerarchitektur kombiniert werden, ohne dass tiefere Kenntnisse der im allgemeine Teil enthaltenen die Steuerung eines hydrostatischen Getriebes notwendig sind.

Der spezielle Teil 31 gemäß Figur 2 ist für Summierungsgetriebe, der spezielle Teil 32 für Synchrongetriebe, der spezielle Teil 33 für Lastschaltgetriebe und der spezielle Teil für reine hydrostatische Getriebe vorgesehen. Nach der Zusammenfügung eines speziellen Teils mit dem allgemeinen Teil 30 gelangen die temporären Steuervariablen $\alpha_{m,tmp}$ und $\Delta p_{tmp}$ vom allgemeinen Teil 30 zum speziellen Teil und werden dort überschrieben. Zum Beispiel benötigen Synchrongetriebe während der Synchronisierungsphase eine drehmomentfreie Eingangswelle, die für andere Arten von mechanischen Getrieben nicht notwendig ist. Der spezielle Teil 32 garantiert diese Drehmomentfreiheit, indem er den Schwenkwinkel $\alpha_{m,tmp}$ für den Hydromotor und die gewünschte Druckdifferenz $\Delta p_{tmp}$ überschreibt.

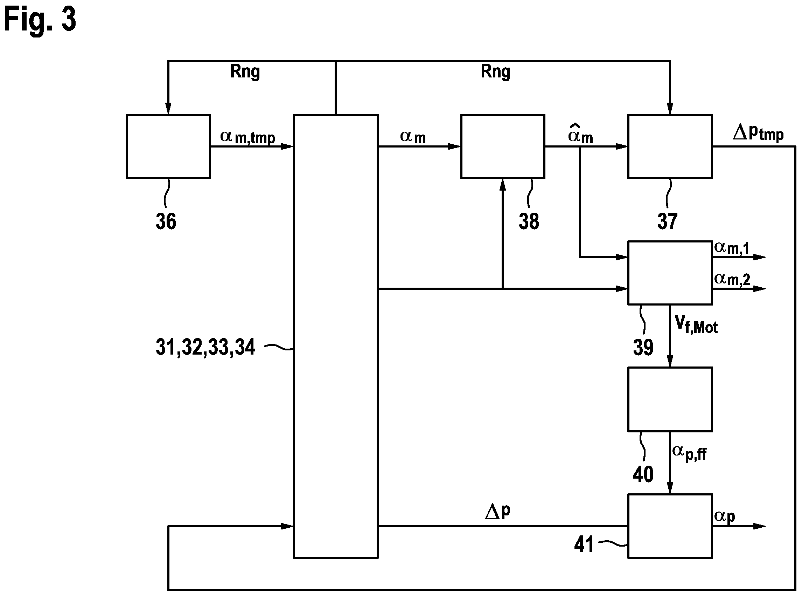

Für ein Fahrgetriebe, dessen hydrostatischer Teil zwei Hydromotoren aufweist, ist die Steuerarchitektur in Figur 3 detaillierter gezeigt. Ein spezieller Teil ist mit 31, 32, 33, 34 bezeichnet. Diesem wird von einem Block 36 des allgemeinen Teils das Signal für den provisorischen gewünschten Schwenkwinkel $\alpha_{m,tmp}$ eines Hydromotors und von einem Block 37 des allgemeinen Teils das Signal für die provisorische gewünschte Druckdifferenz $\Delta p_{tmp}$ zugeführt. Die Ausgangssignale des speziellen Teils sind der gewünschte Schwenkwinkel $\alpha_m$ eines Hydromotors, die finale gewünschte Druckdifferenz $\Delta p$ und eine Statusinformation State über das mechanische Getriebe. Der Block 38 ermittelt mit Hilfe von $\alpha_m$ den geschätzten Schwenkwinkel $\alpha_m$ des zweiten Hydromotors und der finalen gewünschten Druckdifferenz $\Delta p_{tmp}$. Der Motorregler 39 regelt den Schwenkwinkel $\alpha_{m,1}$ eines ersten Hydromotors und den Schwenkwinkel $\alpha_{m,2}$ eines zweiten Hydromotors. Die Vorsteuerung 40 ermittelt mit Hilfe des gewünschten Volumenstroms $V_{f,Mot}$ der Motoren einen vorgesteuerten Anteil am Schwenkwinkel $\alpha_{p,ff}$ der Hydropumpe und gibt diesen an einen Druckregler 41, der durch Einstellung des Schwenkwinkels $\alpha_p$ der Hydropumpe den Druck regelt.

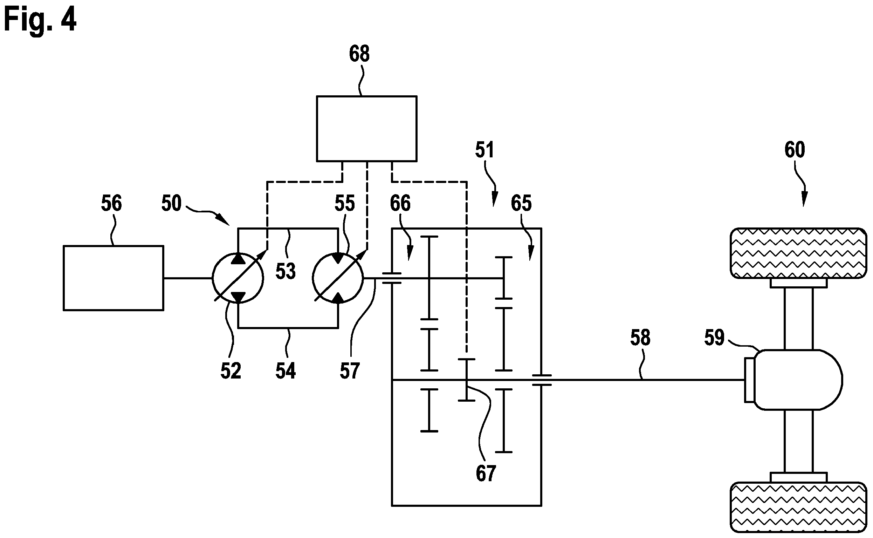

Die elektronische Steuerung gemäß Figur 1 und die Steuerarchitektur gemäß den Figuren 2 und 3 können auf verschiedene Fahrgetriebe verwendet werden, von denen in den Figuren 4 bis 12 eine Auswahl gezeigt ist.

Der Fahrantrieb gemäß Figur 4 ist für eine mobile Arbeitsmaschine, zum Beispiel für einen Radlader vorgesehen und umfasst ein Fahrgetriebe 49, das die Kombination eines hydrostatisches Getriebe 50 und eines mechanischen Schaltgetriebes 51 mit zwei Gangstufen darstellt. Das hydrostatische Getriebe 50 hat eine als Axialkolbenpumpe in Schrägscheibenbauweise ausgestaltete erste Hydromaschine 52, die über den einen Kreislaufzweig bildende Arbeitsleitung 53 und eine den anderen Kreislaufzweig bildende Arbeitsleitung 54 fluidisch mit einer als Axialkolbenmotor in Schrägachsenbauweise ausgebildeten zweiten Hydromaschine 55 in einem geschlossenen hydraulischen Kreis verbunden ist. Eine Triebwelle der ersten Hydromaschine ist mit einer Antriebswelle einer als Dieselmotor ausgebildeten Antriebsmaschine 56 gekoppelt. Eine Triebwelle der zweiten Hydromaschine 55 ist mit einer Eingangswelle 57 des Schaltgetriebes 51 gekoppelt. Eine Ausgangswelle 58 des Schaltgetriebes 51 ist mit einem Differential 59 einer zweirädrigen Achse 60 gekoppelt. Die Schrägscheibe der Hydromaschine 52 und die Zylindertrommel der Hydromaschine 55 können stetig auf verschiedene Schwenkwinkel gestellt werden, so dass jede der beiden Hydromaschinen in ihrem Hubvolumen verstellbar ist. Der Schwenkwinkel der ersten Hydromaschine kann dabei über eine Nullstellung der Schrägscheibe hinweg verstellt werden, so dass unter Beibehaltung der Drehrichtung der ersten Hydromaschine 52 eine Drehrichtungsumkehr der nur einseitig verschwenkbaren, zweiten Hydromaschine 55 möglich ist.

Das Schaltgetriebe 51 hat eine erste Getriebestufe 65 mit einer ersten Übersetzung und eine zweite Getriebestufe 66 mit einer von der ersten Übersetzung verschiedenen, zweiten Übersetzung zwischen der Drehzahl der Eingangswelle 57 und der Drehzahl der Ausgangswelle 58. Des Weiteren hat das Schaltgetriebe 51 eine Synchronisiereinrichtung 67, die in nicht näher dargestellter Weise hydraulisch betätigbar ist.

Das hydrostatische Getriebe 50 hat einen variablen, kontinuierlich verstellbaren Übersetzungsbereich. Um einen erforderlichen Geschwindigkeitsbereich der mobilen Arbeitsmaschine abdecken zu können, ist dem hydrostatischen Getriebe 50 das Schaltgetriebe 51 mit den zwei Getriebestufen 65 und 66 nachgeschaltet. Das Schaltgetriebe 51 ist dabei durch die Synchronisiereinrichtung 67 derart ausgestaltet, dass es während der Fahrt schaltbar ist. Eine Getriebeanordnung mit diesem Merkmal ist beispielsweise unter der Bezeichnung "Shift on Fly" der Anmelderin bekannt. Das Fahren in einer Getriebestufe und das Schalten zwischen den Getriebestufen wird von dem gemäß den Figuren 1 bis 3 ausgebildeten elektronischen Steuergerät 68 aufgrund der Fahrzeugparameter und gewisser variabler Eingangsgrößen gesteuert.

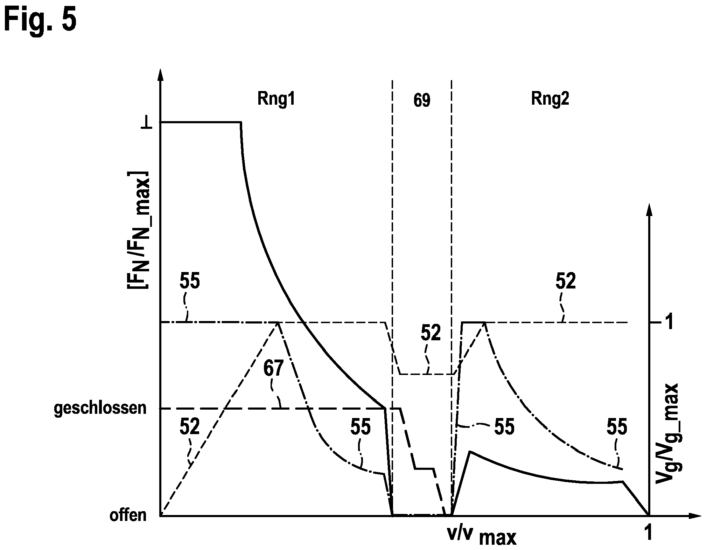

Auf welches Hubvolumen $V_g/V_{g\_max}$ die beiden Hydromaschine 52 und 55 gestellt sind und welche Zugkraft $F_N/F_{N\_max}$ mit einem Fahrgetriebe gemäß Figur 4 entwickelt wird, ist ausgehend von einer Fahrgeschwindigkeit null bis zu einer Maximalgeschwindigkeit in dem Schaltdiagramm gemäß Figur 5 dargestellt. Entlang der waagerechten Achse sind der erste Fahrbereich Rng1 und der zweite Fahrbereich Rng2 und dazwischen ein Übergangsbereich 69 aufgetragen. Entlang der einen senkrechten Achse sind die Zugkraft $F_N/F_{N\,max}$ und weiterhin die Position der Synchronisiereinrichtung 67 aufgetragen. Auf der anderen senkrechten Achse sind die Hubvolumina der Hydropumpe 52 und des Hydromotors 55 aufgetragen. Dabei kennzeichnet die Kurve I die Zugkraft, die Kurve II das Hubvolumen der Hydropumpe 52, die Kurve III das Hubvolumen des Hydromotors 55 und die Kurve IV die Position der Synchronisiereinrichtung 67. Anhand der Kurve II erkennt man, dass der Hydromotor 55 während des Schaltvorgangs auf einen sehr kleinen Schwenkwinkel zurückgeschwenkt ist, damit die Eingangswelle 57 des Getriebes 51 während des Schaltvorgangs drehmomentfrei ist.

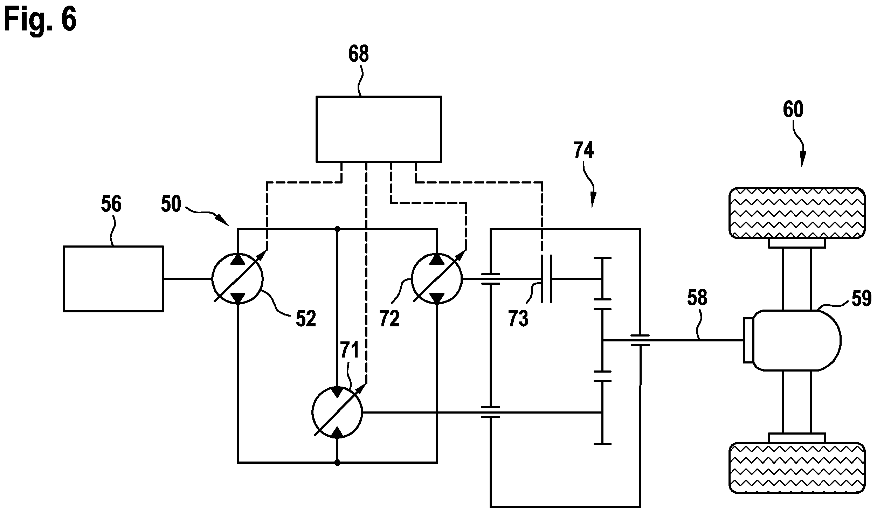

Der Fahrantrieb nach Figur 6 hat wiederum ein hydrostatisches Getriebe 50 mit einer in ihrem Hubvolumen über eine Nullstellung hinweg verstellbare und überwiegend als Hydropumpe betriebene erste Hydromaschine 52, die von dem Verbrennungsmotor 56, z.B. von einem Dieselmotor, angetrieben wird. Die Hydropumpe 52 ist hier in einem geschlossenen hydraulischen Kreislauf mit zwei parallel zueinander angeordneten Hydromotoren 71 und 72 fluidisch verbunden, die in ihrem Hubvolumen einseitig zwischen einem minimalen Wert und einem maximalen Wert verstellbar sind. Der zweite Hydromotor 72 ist temporär über eine Kupplung 73 und über ein Summierungsgetriebe 74 an dessen Ausgangswelle 58 und über diese mit einem Differential 59 einer zweirädrigen Achse 60 einer mobilen Arbeitsmaschine, zum Beispiel eines Radladers, verbindbar. Der erste Hydromotor 71 ist permanent über das Summierungsgetriebe 74 an dessen Ausgangswelle 58 gekoppelt. Das Summierungsgetriebe 74 ist kein Schaltgetriebe mit verschiedenen Gangstufen. Verschiedene Fahrbereiche des Fahrantriebs nach Figur 6 sind dadurch gekennzeichnet, dass in einem ersten Fahrbereich Rng1 die Kupplung 73 geschlossen ist und sowohl der permanente, erste Hydromotor 71 als auch der temporäre Hydromotor 72 für den Antrieb der Ausgangswelle 58 des Summierungsgetriebes 74 genutzt werden und dass in einem zweiten Fahrbereich Rng2 die Kupplung 73 offen und der Hydromotor 72 auf ein Hubvolumen null zurückgeschwenkt ist. Im zweiten Fahrbereich Rng2 nimmt also der zweite Hydromotor 72 kein von der Hydropumpe 52 gefördertes Druckmittel mehr ab. Vielmehr wird die gesamte Fördermenge von dem ersten Hydromotor 71 geschluckt, so dass dieser wesentlich schneller als im ersten Fahrbereich Rng1 drehen kann.

Es ist wiederum eine elektronisches Steuergerät 68 vorhanden, über das die Schwenkwinkel $\alpha$ der Hydropumpe 52 und der beiden Hydromotoren 71 und 72 eingestellt werden und die Kupplung 73 betätigt wird.

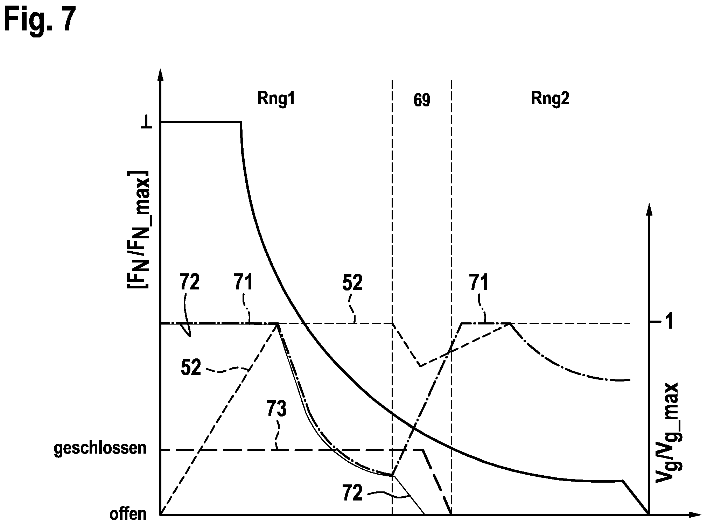

In den Schaltdiagrammen nach den Figuren 7 bis 9 sind wie bei dem Schaltdiagramm nach Figur 5 wiederum entlang der waagerechten Achse der erste Fahrbereich Rng1 und der zweite Fahrbereich Rng2 und dazwischen ein Übergangsbereich 69 aufgetragen. Entlang der einen senkrechten Achse sind die Zugkraft $F_N/F_{N\,max}$ und weiterhin der Zustand der Kupplung 73 aufgetragen. Auf der anderen senkrechten Achse sind die Hubvolumina der Hydropumpe 52 und des Hydromotors 55 aufgetragen. Dabei kennzeichnet jeweils die Kurve I die Zugkraft, die Kurve II das Hubvolumen der Hydropumpe 52, die Kurve III das Hubvolumen des Hydromotors 71 und die Kurve IV den Zustand der Kupplung 73 und die Kurve V das Hubvolumen des Hydromotors 72. Anhand der Kurve IV erkennt man, dass die Kupplung 73 im ersten Fahrbereich Rng1 geschlossen und im zweiten Fahrbereich Rng2 geöffnet ist.

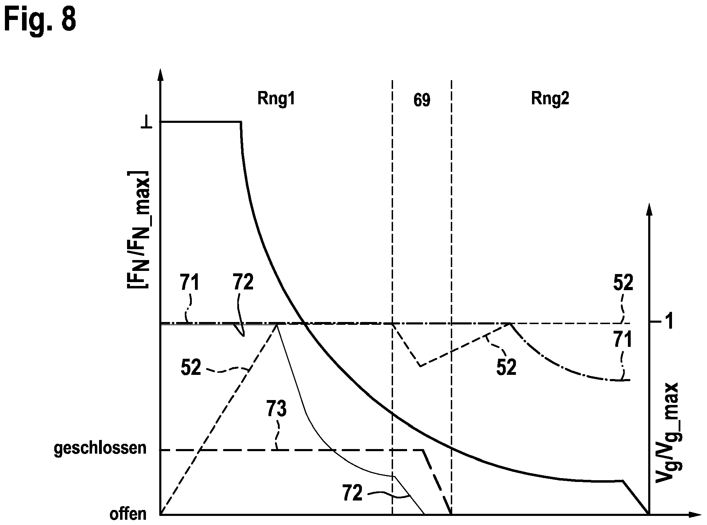

Die beiden Schaltdiagramme nach den Figuren 7 und 8 unterscheiden sich dadurch voneinander, dass gemäß dem Schaltdiagramm nach Figur 7 der Hydromotor 71, der permanent mit der Ausgangswelle 58 verbunden ist, und der Hydromotor 72 im ersten Fahrbereich Rng1 bis auf denselben minimalen Schwenkwinkel zurückgeschwenkt werden, ehe im Übergangsbereich der Hydromotor 72 bis auf den Schwenkwinkel null zurückgeschwenkt wird und der Hydromotor 71 wieder voll ausgeschwenkt wird, während gemäß dem Schaltdiagramm nach Figur 8 im ersten Fahrbereich Rng1 nur der zweite Hydromotor 72 zurückgeschwenkt wird, während der erste Hydromotor 71 über den gesamten ersten Fahrbereich Rng1 hinweg, im Übergangsbereich und über einen Teil des zweiten Fahrbereichs Rng2 hinweg voll ausgeschwenkt ist. Bei einer Ansteuerung gemäß dem Schaltdiagramm nach Figur 8 ist also mit dem Fahrgetriebe nach Figur 6 im ersten Fahrbereich Rng1 nur eine kleinere maximale Geschwindigkeit als bei einer Ansteuerung gemäß dem Schaltdiagramm nach Figur 7.

Im zweiten Fahrbereich Rng2 schwenkt der Hydromotor 71 dann ab einem Punkt zurück, an dem die im Übergangsbereich etwas zurückgeschwenkte Hydropumpe 55 wieder voll ausgeschwenkt ist.

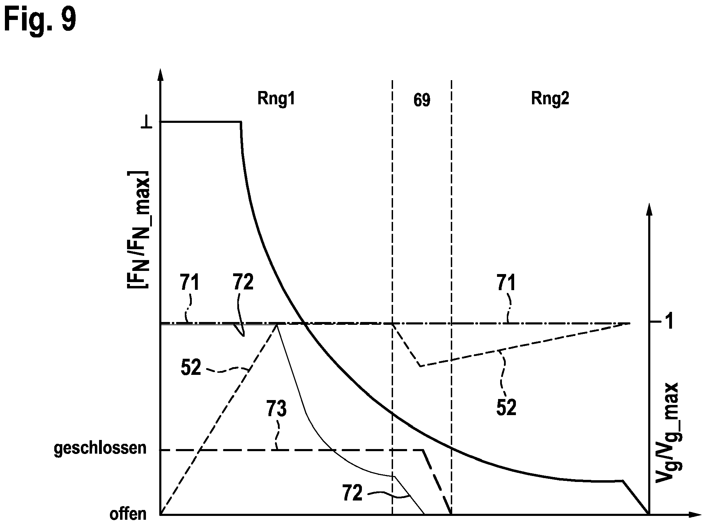

Das Schaltdiagramm gemäß Figur 9 bezieht sich auf ein Fahrgetriebe ähnlich demjenigen nach Figur 6. Der Unterschied besteht darin, dass der zweite Hydromotor 72, der permanent mit der Ausgangswelle 58 des Summierungsgetriebes 74 verbunden ist, nun ein Konstantmotor ist, dessen Hubvolumen nicht veränderbar ist. Eine Änderung der Fahrzeuggeschwindigkeit im zweiten Fahrbereich Rng2 wird deshalb, wie aus dem Schaltdiagramm nach Figur 9 hervorgeht, nur durch die Änderung des Hubvolumens der Hydropumpe 52 erreicht.

Für die vier verschiedenen Fahrgetriebe gemäß Figur 4 und den Figuren 6 bis 9 ergeben sich die Steuervariablen aus der folgenden Tabelle 1. Die Steuerparameter ergeben sich aus Tabelle 2.

Tabelle 1: Steuervariable

| | Figuren 4 und 5 | Figuren 6 und 7 | Figuren 6 und 8 | Figur 9 |
|---|---|---|---|---|
| | Variante 1 | Variante 2 | Variante 3 | Variante 4 |
| $\alpha p$, curr | der für die Berechnung Ansteuerstroms benutzte gewünschte Schwenkwinkel der Pumpe | | | |
| $\alpha m$, 1,curr | nicht relevant | | der für die Berechnung des Ansteuerstromes für den temporären Hydromotor benutzte gewünschte Motorschwenkwinkel | |

(fortgesetzt)

|  | Figuren 4 und 5 | Figuren 6 und 7 | Figuren 6 und 8 | Figur 9 |
|---|---|---|---|---|
|  | Variante 1 | Variante 2 | Variante 3 | Variante 4 |
| $\alpha$m, 2,curr | der für die Berechnung des Ansteuerstromes für den Hydromotor benutzte gewünschte Motorschwenkwinkel | der für die Berechnung des Ansteuerstromes für den permanenten Hydromotor benutzte gewünschte Motorschwenkwinkel | | |
| $\alpha_m$ | der gewünschte Motorschwenkwinkel | der gewünschte Motorschwenkwinkel | | |
| $\alpha_m$ | der geschätzte Motorschwenkwinkel | der geschätzte Motorschwenkwinkel | | |
| State | Hochschalten, Runterschalten, normales Fahren | das Verhältnis zwischen dem temporären Motor und dem permanenten Motor | | |

Tabelle 2: Steuerparameter

|  | Figuren 4 und 5 | Figuren 6 und 7 | Figuren 6 und 8 | Figur 9 |
|---|---|---|---|---|
|  | Variante 1 | Variante | Variante 3 | Variante 4 |
| $\alpha_{p,curr}$ | der für die Berechnung Ansteuerstroms benutzte gewünschte Schwenkwinkel der Pumpe | | | |
| Vm,1 | Vm | Vm,Tmp | | |
| Vm,2 | Vm | Vm,Per | | |
| $V_p$ | $V_p$ | $V_p$ | | |
| i1 | iRng1 | iTmp | | |
| i2 | iRng2 | iPer | | |

Die Variablen, die gemäß Figur 3 berechnet werden, ergeben sich aus folgenden Gleichungen (1) und (2).

$$\alpha_{Mot,tmp} = \frac{\frac{n_p}{n_m} \cdot V_p - V_{m,2} \cdot (2 - Rng) \cdot K_1}{\left[\frac{i_1}{i_2} \cdot K_2 \cdot V_{m,1} + V_{m,2} \cdot K_6\right] \cdot (2 - Rng) + V_{m,2} \cdot K_5 \cdot (Rng - 1)} \qquad (1)$$

$$\Delta p_{tmp} = \frac{(T_{des} \cdot 2\pi)}{V_{m,1} \cdot \alpha_m \cdot i_1 + V_{m,2} \cdot i_2 \cdot K_3 + V_{m,2} \cdot i_2 \cdot \alpha_m \cdot K_4} \cdot (2 - Rng)$$
$$+ \frac{(T_{des} \cdot 2\pi)}{V_{m,2} \cdot i_2 \cdot \alpha_m} \cdot (Rng - 1) \qquad (2)$$

Die Werte für die Faktoren K sind der folgenden Tabelle 3 zu entnehmen.

Tabelle 3: Faktorenmatrix

|  | Figuren 4 und 5 | Figuren 6 und 7 | Figuren 6 und 8 | Figur 9 |
|---|---|---|---|---|
|  | Variante 1 | Variante 2 | Variante 3 | Variante 4 |
| $K_1$ | 0 | 0 | 1 | 1 |
| K2 | 0 | 1 | 1 | 1 |
| $K_3$ | 0 | 0 | 1 | 1 |

(fortgesetzt)

|  | Figuren 4 und 5 | Figuren 6 und 7 | Figuren 6 und 8 | Figur 9 |
|---|---|---|---|---|
|  | Variante 1 | Variante 2 | Variante 3 | Variante 4 |
| $K_4$ | 0 | 1 | 0 | 0 |
| $K_5$ | 1 | 1 | 1 | 0.001 |
| $K_6$ | 1 | 1 | 0 | 0 |

Die Faktoren K gemäß Tabelle 3 werden benutzt, um bestimmte Teile der Gleichungen zu aktivieren oder zu deaktivieren. Auf diese Weise sind die Gleichungen für verschiedene Arten von mechanischen Getrieben benutzbar. Es sei darauf hingewiesen, dass $K_5$ eine gewisse kleine Zahl ist, deren Sinn es ist, den berechneten gewünschten Motorschwenkwinkel größer als 1 zu machen und so im folgenden Modul auf 1 zu setzen. Die Gleichungen (1) und (2) und die Variablen, Parameter und Faktoren, die in den Tabellen 1, 2 und 3 gezeigt sind, sind im allgemeinen Teil 30 der Steuerarchitektur hinterlegt.

Die elektronischen Steuerungen gemäß der Erfindung sind auch in Kombination mit Fahrgetrieben verwendbar, die mehr als zwei Fahrbereiche aufweisen. So kann insbesondere auch bei einem 2+3 Getriebe, dessen hydrostatischer Getriebeteil 50 wie bei dem Fahrgetriebe nach Figur 6 eine ihrem Hubvolumen über eine Nullstellung hinweg verstellbare und überwiegend als Hydropumpe betriebene erste Hydromaschine 52, die von dem Verbrennungsmotor 56, z.B. von einem Dieselmotor, angetrieben wird, und zwei Hydromotoren 71 und 72 aufweist, die in ihrem Hubvolumen einseitig zwischen einem minimalen Wert und einem maximalen Wert verstellbar sind, die parallel zueinander angeordnet sind und mit der Hydropumpe 52 in einem geschlossenen hydraulischen Kreislauf fluidisch verbunden sind.

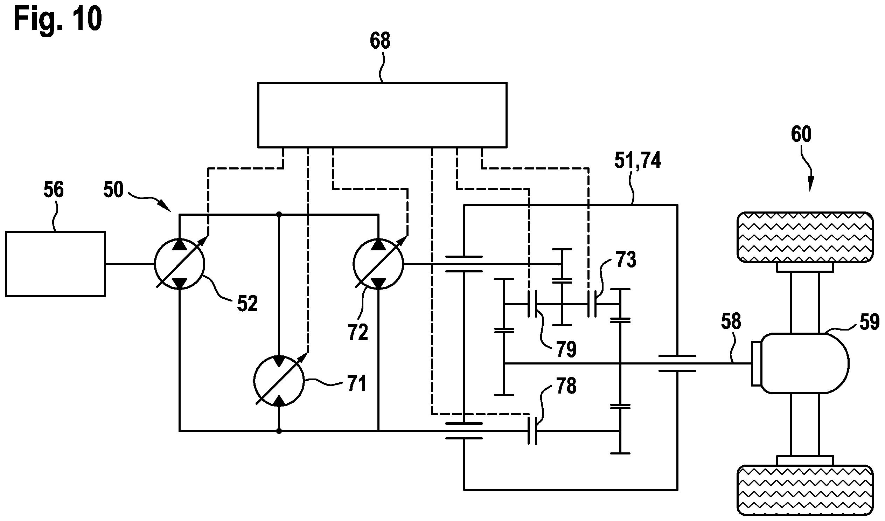

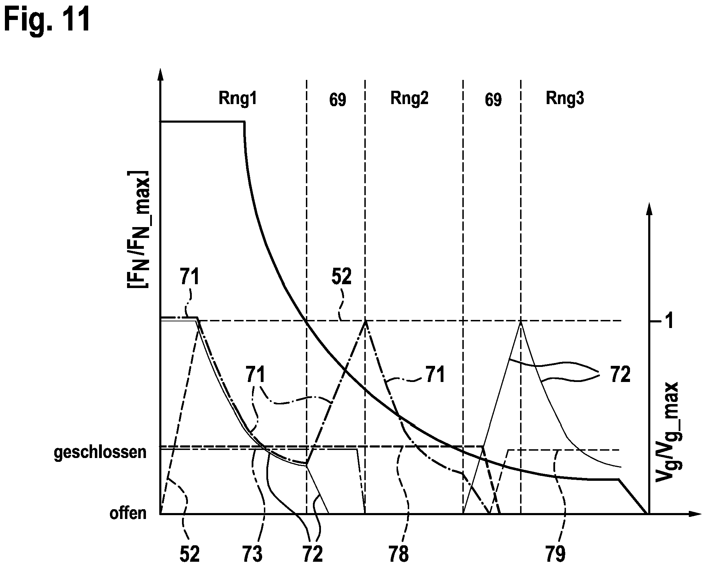

In den Figuren 10 und 11 ist ein derartiges 2+3-Getriebe gezeigt. Dabei hat der Fahrantrieb einen ersten Hydromotor 71, der über eine gegenüber dem Fahrantrieb gemäß Figur 6 zusätzliche Kupplung 78 mit der Ausgangswelle 58 eines mechanischen Getriebes 74 verbunden oder davon abgekoppelt werden kann. Dem zweiten Hydromotor 72 ist außer der Kupplung 73, über die er über eine erste Zahnradstufe mit der Ausgangswelle 58 verbindbar ist, eine weitere Kupplung 79 zugeordnet, über die er über eine zweite Zahnradstufe, die ein anderes Übersetzungsverhältnis als die erste Stirnradstufe hat, mit der Ausgangswelle 58 verbindbar ist. Die beiden Kupplungen 73 und 79 sind entweder beide offen oder es ist entweder die Kupplung 73 oder die Kupplung 79 geschlossen. Das Steuergerät 68 ist außer mit der Hydropumpe 52, den beiden Hydromotoren 71 und 72 und der Kupplung 73 auch mit den beiden zusätzlichen Kupplungen 78 und 79 elektrisch verbunden, um diese zu steuern.

Mit dem Fahrgetriebe gemäß Figur 10 sind zumindest die drei Fahrbereiche Rng1, Rng2 und Rng3 gemäß Figur 11 möglich.

Im ersten Fahrbereich Rng1 sind die beiden Kupplungen 73 und 78 geschlossen, so dass beide Hydromotoren 71 und 72 arbeiten und ihre Leistung an die Ausgangswelle 58 abgeben. Zur Erhöhung der Drehzahl der Abtriebswelle 2 werden im ersten Fahrbereich Rng1 beide Hydromotoren 71 und 72 in ihrem jeweiligen Schluckvolumen reduziert.

Im zweiten Fahrbereich Rng2 ist die Kupplung 73 offen, so dass nur der erste Hydromotor 71 über die weiterhin geschlossene Kupplung 78 Leistung an die Ausgangswelle 58 abgibt. Dabei wird für eine zunehmende Fahrgeschwindigkeit einer mobilen Arbeitsmaschine das Schluckvolumen des Hydromotors 71, das während des Fahrbereichswechsels auf seinen maximalen Wert verstellt worden ist, stetig reduziert.

Beim Übergang vom Fahrbereich Rng2 in den schnellsten, dritten Fahrbereich Rng3 wird die Kupplung 78 geöffnet, so dass der erste Hydromotor 71 abgekoppelt ist, und die Kupplung 79 geschlossen. Damit ist im dritten Fahrbereich Rng3 der zweite Hydromotor 72 über die dritte Kupplung 79 und die zweite Zahnradstufe mit der Ausgangswelle 58 verbunden, so dass nur der zweite Hydromotor 72 über eine andere Übersetzung als der erste Hydromotor 71 im zweiten Fahrbereich Rng2 Leistung an die Ausgangswelle 58 abgibt. Im dritten Fahrbereich wird für eine zunehmende Fahrgeschwindigkeit einer mobilen Arbeitsmaschine das Schluckvolumen des Hydromotors 72, das während des Wechsels vom zweiten Fahrbereich Rng2 in den dritten Fahrbereich Rng3 auf seinen maximalen Wert verstellt worden ist, stetig reduziert. Das mechanische Getriebe 74 gemäß Figur 10 ist somit einerseits ein Summierungsgetriebe, andererseits aber auch ein Schaltgetriebe, das die Drehzahl der Abtriebswelle des Hydromotors 72 in Abhängigkeit vom Zustand der Kupplungen 73 und 79 unterschiedlich übersetzt. Die Hydropumpe 52 verbleibt nach der Vergrößerung ihres Hubvolumens von null auf den maximalen Wert bis zur Höchstgeschwindigkeit voll ausgeschwenkt.

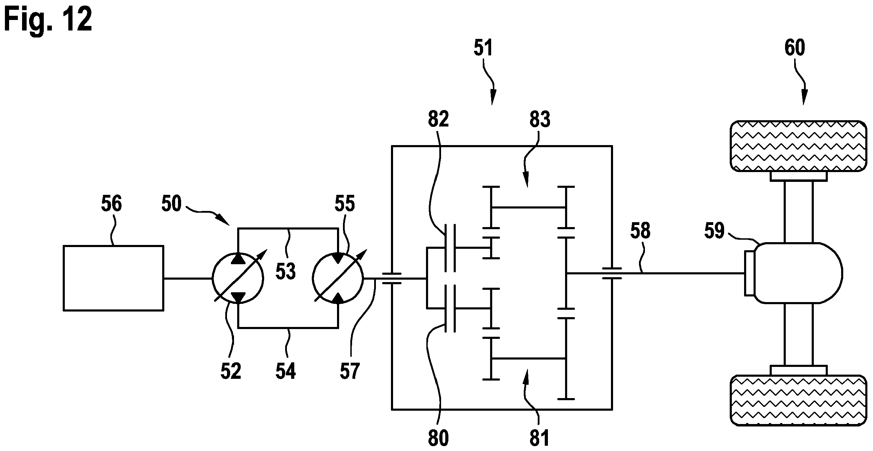

Der Fahrantrieb gemäß Figur 12 hat ein Fahrgetriebe, das die Kombination eines hydrostatisches Getriebe 50, wie es schon aus Figur 4 ersichtlich ist und das eine Hydropumpe 52 und einen mit dieser in einem geschlossenen hydraulischen Kreislauf angeordneten Hydromotor 55 aufweist, und eines mechanischen Schaltgetriebes 51 mit zwei Gangstufen darstellt. Die Triebwelle der Hydropumpe 52 ist mit einem Dieselmotor 56 gekoppelt. Die Triebwelle des Hydromotors 55 ist mit der Eingangswelle 57 des Schaltgetriebes 51 gekoppelt. Eine Ausgangswelle 58 des Schaltgetriebes 51 ist mit einem Differential 59 einer zweirädrigen Achse 60 gekoppelt. Die Schrägscheibe der Hydropumpe 52 und die Zylindertrommel des Hydromotors 55 können stetig auf verschiedene Schwenkwinkel gestellt werden, so dass jede der beiden Hydromaschinen in ihrem Hubvolumen verstellbar ist. Der Schwenkwinkel der Hydropumpe kann dabei über eine Nullstellung der Schrägscheibe hinweg verstellt werden, so dass unter Beibehaltung der Drehrichtung der Hydropumpe 52 eine Drehrichtungsumkehr des nur einseitig verschwenkbaren Hydromotors 55 möglich ist.

Das Schaltgetriebe 51 ist als Doppelkupplungsgetriebe ausgebildet und stark vereinfacht dargestellt. Der Hydromotor 55 ist alternativ über eine erste Kupplung 80 und einem ersten Getriebezweig 81 und über eine zweite Kupplung 82 und einen zweiten Getriebezweig 83 mit der Ausgangswelle 58 des Getriebes 51 verbindbar, wobei die Übersetzung im zweiten Getriebezweig 83 größer als im ersten Getriebezweig 81 ist. In der Praxis kann ein solches Getriebe eine Planetenstufe mit einem Sonnenrad, mit Planetenrädern und mit einem Hohlrad enthalten, wobei das Hohlrad über eine erste Kupplung fest mit einem Gestell verbindbar ist, so dass es sich nicht drehen kann, und über eine zweite Kupplung drehfest mit dem Sonnenrad beziehungsweise mit dessen Antriebswelle verbindbar ist.

In einem ersten Fahrbereich mit niedriger Geschwindigkeit ist die Kupplung 80 geschlossen, während die Kupplung 82 geschlossen ist. In einem zweiten Fahrbereich mit höheren Geschwindigkeiten als im ersten Fahrbereich ist die Kupplung 82 geschlossen, während die Kupplung 80 geschlossen ist.

Bezugszeichenliste

| | |
|---|---|
| 15 | elektronische Steuerung |
| 20 | Steuerungsabschnitt von 15 |
| 21 | Steuerungsabschnitt von 15 |
| 22 | Steuerungsabschnitt von 15 |
| 23 | Steuerungsabschnitt von 15 |
| 24 | Drucksteuereinrichtung |
| 30 | allgemeiner Teil einer Softwareplattform |
| 31 | spezieller Teil der Softwareplattform |
| 32 | spezieller Teil der Softwareplattform |
| 33 | spezieller Teil der Softwareplattform |
| 34 | spezieller Teil der Softwareplattform |
| 36 | Softwareblock |
| 37 | Softwareblock |
| 38 | Softwareblock |
| 39 | Motorregler |
| 40 | Vorsteuerung |
| 41 | Druckregler |
| 49 | Fahrgetriebe |
| 50 | hydrostatisches Getriebe |
| 51 | mechanischen Schaltgetriebe |
| 52 | Hydropumpe |
| 53 | Arbeitsleitung |
| 54 | Arbeitsleitung |
| 55 | Hydromotor |
| 56 | Dieselmotor |
| 57 | Eingangswelle von 51 |
| 58 | Ausgangswelle von 51 |
| 59 | Differential |
| 60 | zweirädrige Achse |
| 65 | erste Getriebestufe von 61 |
| 66 | zweite Getriebestufe von 61 |
| 67 | Synchronisiereinrichtung |
| 68 | elektronisches Steuergerät |
| 69 | Übergangsbereich |
| 71 | erster Hydromotor |
| 72 | zweiter Hydromotor |
| 73 | Kupplung |
| 74 | Summierungsgetriebe |
| 78 | Kupplung |

79 Kupplung
80 erste Kupplung
81 erster Getriebzweig
82 zweite Kupplung
83 zweiter Getriebzweig

| | |
|---|---|
| $i_{mech}$ | Übersetzung des mechanischen Getriebes |
| $v_{veh}$ | Geschwindigkeit des Fahrzeugs |
| $\alpha_{ped}$ | Winkelstellung eines Fahrpedals |
| $T_{des}$ | Zielzugkraft |
| $n_m$ | Drehzahl des Hydromotors |
| $\alpha_m$ | gewünschtes normiertes Hubvolumen eines Hydromotors |
| $n_p$ | Drehzahl der Hydropumpe |
| $n_m$ | die Drehzahl des Hydromotors |
| $V_p$ | maximales Hubvolumen der Hydropumpe |
| $V_m$ | maximales Hubvolumen des Hydromotors oder der Hydromotoren |
| $T_{des}$ | gewünschtes Zieldrehmoment |
| $i_{mech}$ | mechanische Übersetzung |
| $\Delta p_{des}$ | gewünschte Druckdifferenz |
| Rng1 | Fahrbereich |
| Rng2 | Fahrbereich |

## Patentansprüche

1. Fahrantrieb für ein Fahrzeug mit einem Fahrgetriebe (49), das ein Fahren in mehreren Fahrbereichen (Rng1, Rng2) ermöglicht und in dem ein mechanisches Getriebe (51, 74) kombiniert ist mit einem hydrostatischen Getriebe (50), das eine in ihrem Hubvolumen verstellbare Hydropumpe (52) und wenigsten einen Hydromotor (55) umfasst, der mit der Hydropumpe (52) in einem geschlossenen hydraulischen Kreislauf mit zwei Kreislaufzweigen (53, 54) angeordnet und mit einem Eingang (57) des mechanischen Getriebes (51, 74) verbunden ist, und mit einem elektronischen Steuergerät (68) zur Durchführung einer zugkraftbasierten Steuerung, **dadurch gekennzeichnet, dass** von dem elektronischen Steuergerät (68) aus vor einem Wechsel des Fahrbereichs vorliegenden Fahrzeugparametern die nach dem Wechsel des Fahrbereichs gewünschte Zielzugkraft ($T_{des}$) und aus der gewünschten Zielzugkraft ($T_{des}$) und aus einem Hubvolumen ($\alpha_m$) des wenigsten einen Hydromotors (55) eine Solldruckdifferenz ($\Delta p_{des}$) zwischen den beiden Kreislaufzweigen (53, 54) des geschlossenen hydraulischen Kreislaufs ermittelt wird und dass nach dem Wechsel des Fahrbereichs zwischen den zwei Kreislaufzweigen (53, 54) des geschlossenen hydraulischen Kreislaufs durch einen Druckregler (41) eine der Solldruckdifferenz entsprechende Druckdifferenz eingestellt wird.

2. Fahrantrieb nach Patentanspruch 1, wobei die gewünschte Zielzugkraft ($T_{des}$) gleich der Zugkraft vor dem Wechsel des Fahrbereichs (Rng1, Rng2) ist.

3. Fahrantrieb nach Patentanspruch 1 oder 2, wobei in die Ermittlung der gewünschten Zielzugkraft ($T_{des}$) die Stellung ($\alpha_{ped}$) eines Fahrpedals eingeht.

4. Fahrantrieb nach Patentanspruch 3, wobei in die Ermittlung der gewünschten Zielzugkraft ($T_{des}$) die Geschwindigkeit ($v_{veh}$) des Fahrzeugs eingeht.

5. Fahrantrieb nach einem vorhergehenden Patentanspruch, wobei wenigstens ein Hydromotor (55, 71, 72) in seinem Hubvolumen verstellbar ist und wobei das in die Ermittlung der Solldruckdifferenz ($\Delta p_{des}$) eingehende normierte Hubvolumen ($\alpha_m$) des wenigstens einen Hydromotors (55, 71, 74) nach der Formel $\alpha_m = \min(n_p V_p/n_m V_m, 1)$ ermittelt wird, wobei $n_p$ die Drehzahl der Hydropumpe (52), $n_m$ die Drehzahl des Hydromotors (55, 71, 72), $V_p$ das maximale Hubvolumen der Hydropumpe (52) und $V_m$ das maximale Hubvolumen des Hydromotors (55) oder der Hydromotoren (71, 72) ist.

6. Fahrantrieb nach Patentanspruch 5, wobei die Drehzahl des Hydromotors durch einen Drehzahlsensor erfasst wird.

7. Fahrantrieb nach Patentanspruch 5, wobei die Drehzahl des Hydromotors aus der Geschwindigkeit des Fahrzeugs ermittelt wird.

8. Fahrantrieb nach einem vorhergehenden Patentanspruch, wobei das mechanische Getriebe (51) wenigstens zwei Gangstufen aufweist und beim Wechsel des Fahrbereichs (Rng1, Rng2) von einer Gangstufe in eine andere Gangstufe gewechselt wird.

## Claims

1. Drive for a vehicle with a transmission (49), which allows driving in a number of driving modes (Rngl, Rng2) and in which a mechanical transmission (51, 74) is combined with a hydrostatic transmission (50), which comprises a hydraulic pump (52), which is adjustable in its swept volume, and at least one hydraulic motor (55), which is arranged with the hydraulic pump (52) in a closed hydraulic circuit with two circuit branches (53, 54) and is connected to an input (57) of the mechanical transmission (51, 74), and with an electronic control unit (68) for carrying out a traction-force-based control, **characterized in that** the electronic control unit (68) uses vehicle parameters existing before a change of the driving mode to determine the target traction force ($T_{des}$) desired after the change of driving mode and uses the desired target traction force ($T_{des}$) and a swept volume ($\alpha_m$) of the at least one hydraulic motor (55) to determine a target pressure differential ($\Delta p_{des}$) between the two circuit branches (53, 54) of the closed hydraulic circuit, and **in that**, after the change of driving mode, a pressure differential corresponding to the target pressure differential is set between the two circuit branches (53, 54) of the closed hydraulic circuit by a pressure controller (41).

2. Drive according to Patent Claim 1, wherein the desired target traction force ($T_{des}$) is equal to the traction force before the change of driving mode (Rngl, Rng2) .

3. Drive according to Patent Claim 1 or 2, wherein the position ($\alpha_{ped}$) of an accelerator pedal is included in the determination of the desired target traction force ($T_{des}$) .

4. Drive according to Patent Claim 3, wherein the speed ($v_{veh}$) of the vehicle is included in the determination of the desired target traction force ($T_{des}$).

5. Drive according to one of the preceding patent claims, wherein at least one hydraulic motor (55, 71, 72) is adjustable in its swept volume and wherein the normalized swept volume ($\alpha_m$) of the at least one hydraulic motor (55, 71, 74) that is included in the determination of the target pressure differential ($\Delta p_{des}$) is determined on the basis of the formula $\alpha_m = \min(n_p V_p / n_m V_m, 1)$, where $n_p$ is the speed of the hydraulic pump (52), $n_m$ is the speed of the hydraulic motor (55, 71, 72), $V_p$ is the maximum swept volume of the hydraulic pump (52) and $V_m$ is the maximum swept volume of the hydraulic motor (55) or the hydraulic motors (71, 72).

6. Drive according to Patent Claim 5, wherein the speed of the hydraulic motor is detected by a speed sensor.

7. Drive according to Patent Claim 5, wherein the speed of the hydraulic motor is determined from the speed of the vehicle.

8. Drive according to one of the preceding patent claims, wherein the mechanical transmission (51) has at least two gear stages and, when there is a change of driving mode (Rngl, Rng2), is changed from one gear stage to another gear stage.

## Revendications

1. Système d'entraînement pour un véhicule doté d'une transmission d'entraînement (49), qui permet une conduite selon plusieurs plages de conduite (Rngl, Rng2) et dans laquelle une transmission mécanique (51, 74) est combinée avec une transmission hydrostatique (50), qui comprend une pompe hydraulique (52) réglable quant à son volume de travail et au moins un moteur hydraulique (55), qui est agencé avec la pompe hydraulique (52) dans un circuit hydraulique fermé avec deux branches de circuit (53, 54) et qui est relié à une entrée (57) de la transmission mécanique (51, 74), et comprenant un appareil de commande électronique (68) pour l'exécution d'une commande basée sur la force de traction, **caractérisé en ce qu'**une différence de pression de consigne ($\Delta p_{des}$) entre les deux branches de circuit (53, 54) du circuit hydraulique fermé est déterminée par l'appareil de commande électronique (68), à partir de paramètres du véhicule présents avant un changement de la plage de conduite, la force de traction cible ($T_{des}$) souhaitée après le changement de la plage de conduite et à partir de la force de traction cible ($T_{des}$) souhaitée et d'un volume de travail ($\alpha_m$) du au moins un moteur hydraulique (55), et **en ce qu'**après le changement de la plage de conduite entre les deux branches (53, 54) du circuit hydraulique fermé, une différence de pression correspondant à la différence de pression de consigne est réglée par un régulateur de pression (41).

2. Système d'entraînement selon la revendication 1, dans lequel la force de traction cible souhaitée ($T_{des}$) est égale à la force de traction avant le changement de plage de conduite (Rngl, Rng2).

3. Système d'entraînement selon la revendication 1 ou 2, dans lequel la position ($\alpha_{ped}$) d'une pédale d'accélérateur est prise en compte dans la détermination de la force de traction cible souhaitée ($T_{des}$).

4. Système d'entraînement selon la revendication 3, dans lequel la vitesse ($v_{veh}$) du véhicule intervient dans la détermination de la force de traction cible souhaitée ($T_{des}$).

5. Système d'entraînement selon une revendication précédente, dans lequel au moins un moteur hydraulique (55, 71, 72) est réglable dans son volume de travail et dans lequel le volume de travail normalisé ($\alpha_m$) de l'au moins un moteur hydraulique (55, 71, 72), entrant dans la détermination de la différence de pression de consigne ($\Delta p_{des}$), est déterminé selon la formule $\alpha_m = \min(n_p V_p / n_m V_m, 1)$, dans laquelle $n_p$ est la vitesse de rotation de la pompe hydraulique (52), $n_m$ est la vitesse de rotation du moteur hydraulique (55, 71, 72), $V_p$ est le volume de travail maximal de la pompe hydraulique (52) et $V_m$ est le volume de travail maximal du moteur hydraulique (55) ou des moteurs hydrauliques (71, 72).

6. Système d'entraînement selon la revendication 5, dans lequel la vitesse de rotation du moteur hydraulique est détectée par un capteur de vitesse de rotation.

7. Système d'entraînement selon la revendication 5, dans lequel la vitesse de rotation du moteur hydraulique est déterminée à partir de la vitesse du véhicule.

8. Système d'entraînement selon une revendication précédente, dans lequel la transmission mécanique (51) présente au moins deux rapports de vitesse et passe d'un rapport de vitesse à un autre lors du changement de la plage de conduite (Rngl, Rng2).

# Fig. 1

$$\alpha_m = \min(n_p V_p / n_m V_m, 1)$$

# Fig. 2

**15**

**30**

$\alpha_{m,tmp}$

$\Delta p_{tmp}$

**31**

$\alpha_{m,tmp}$ →

$\Delta p_{tmp}$ →

→ $\alpha_m$
→ $\Delta p$
→ state

**32**

$\alpha_{m,tmp}$ →

$\Delta p_{tmp}$ →

→ $\alpha_m$
→ $\Delta p$
→ state

**33**

$\alpha_{m,tmp}$ →

$\Delta p_{tmp}$ →

→ $\alpha_m$
→ $\Delta p$
→ state

**34**

$\alpha_{m,tmp}$ →

$\Delta p_{tmp}$ →

→ $\alpha_m$
→ $\Delta p$
→ state

**Fig. 3**

EP 3 832 165 B1

# Fig. 4

# Fig. 5

EP 3 832 165 B1

Fig. 6

## Fig. 7

Fig. 8

# Fig. 9

EP 3 832 165 B1

Fig. 10

# Fig. 11

Rng1    69    Rng2    69    Rng3

$[F_N/F_{N\_max}]$

71    52    71    72

71

geschlossen

offen

52    73    72    78    79

$V_g/V_{g\_max}$

1

EP 3 832 165 B1

Fig. 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3553347 A1

**In der Beschreibung aufgeführte Nicht-Patentliteratur**

- Torque control for mobile machines. *Proceedings of the 11th International Fluid Power Conference, Aachen, Deutschland*